# EUROPEAN PATENT APPLICATION

(11) **EP 2 733 160 A1**
(43) Date of publication of application: **21.05.2014**
(21) Application number: 12808147.8
(22) Date of filing: 04.07.2012
(51) Int. Cl.: C08G 77/20, C08G 77/06, C08G 77/12

(54) **ORGANO POLYSILOXANE, AND METHOD FOR PRODUCING SAME**

(30) Priority: 07.07.2011 JP 2011151311
(71) Applicant: Dow Corning Toray Co., Ltd., Tokyo 100-0004 (JP)
(72) Inventor: OKAWA, Tadashi, Ichihara-shi Chiba 299-0108 (JP); NISHIJIMA, Kazuhiro, Ichihara-shi Chiba 299-0108 (JP); AMAKO, Masaaki, Ichihara-shi Chiba 299-0108 (JP); ITOH, Maki, Ichihara-shi Chiba 299-0108 (JP); MORITA, Yoshitsugu, Ichihara-shi Chiba 299-0108 (JP)
(74) Representative: Earnshaw, Geoffrey Mark
(86) International application number: PCT/JP2012/067635
(87) International publication number: WO 2013/005859

(57) **Abstract**

An organopolysiloxane which forms a cured product having a high refractive index, high transparency, and excellent heat resistance when subjected to a hydrosilylation reaction and which is represented by the following average unit formula:

(R¹₃SiO_{1/2})ₐ (R¹₂SiO_{2/2})_{b} (R²SiO_{3/2})_{c} (SiO_{4/2})_{d}

wherein, R¹ are alkyl groups, alkenyl groups, phenyl groups, or hydrogen atoms; R² is a group represented by R¹ or a condensed polycyclic aromatic group or a group containing a condensed polycyclic aromatic group, but at least one of R¹ or R² in a molecule is an alkenyl group or a hydrogen atom, at least one R² in a molecule is a condensed polycyclic aromatic group or a group containing a condensed polycyclic aromatic group; and **a, b, c** and **d** are numbers that satisfy: 0.01 ≤ **a** ≤ 0.8, 0 ≤ **b** ≤ 0.5, 0.2 ≤ **c** ≤ 0.9, 0 ≤ **d** < 0.2 and **a** + **b** + **c** + **d** = 1.

## Description

### Technical field

The present invention relates to an organopolysiloxane and a method for producing the same.

### Background art

Organopolysiloxanes are used as sealants for LEDs, raw materials for lenses, and the like due to their excellence in transparency and heat resistance. In general, aryl groups such as phenyl groups or naphthyl groups are introduced in order to increase the refractive index of organopolysiloxanes. For example, organopolysiloxanes having a condensed polycyclic aromatic group such as a naphthyl group, an anthracenyl group, or a phenanthryl group in a T unit, that is, as R in a siloxane represented by the following general formula: RSiO_{3/2}, are proposed in Patent Documents 1 to 4.

However, such organopolysiloxanes do not form cured products having high refractive indices, high transparency, and excellent heat resistance when subjected to hydrosilylation reactions.

In addition, an organopolysiloxane having a condensed polycyclic aromatic group such as a naphthyl group, an anthracenyl group, or a phenanthryl group in a D unit, that is, as R in a siloxane represented by the following general formula: R₂SiO_{2/2}, is proposed in Patent Document 5.

However, such an organopolysiloxane has the problem that the cured product typically becomes hard and brittle as the refractive index of the cured product is increased, and the mechanical characteristics and heat resistance of the cured product are diminished as a result.

### Prior art documents

### Patent documents

Patent Document 1: Japanese Unexamined Patent Application Publication No. 2008-024832A
Patent Document 2: Japanese Unexamined Patent Application Publication No. 2009-203463A
Patent Document 3: Japanese Unexamined Patent Application Publication No. 2009-280666A
Patent Document 4: Japanese Unexamined Patent Application Publication No. 2010-007057A
Patent Document 5: Japanese Unexamined Patent Application Publication No. 2000-235103A

### Summary of invention

### Technical problem

An object of the present invention is to provide a novel organopolysiloxane that forms a cured product having a high refractive index, high transparency, and excellent heat resistance when subjected to a hydrosilylation reaction. In addition, another object of the present invention is to provide a method for efficiently producing this type of organopolysiloxane.

### Disclosure of the Invention

The organopolysiloxane of the present invention is represented by the following average unit formula:

(R¹₃SiO_{1/2})ₐ (R¹₂SiO_{2/2})_{b} (R²SiO_{3/2})_{c} (SiO_{4/2})_{d}

wherein, R¹ are alkyl groups, alkenyl groups, phenyl groups, or hydrogen atoms; R² is a group represented by R¹, a condensed polycyclic aromatic group, or a group containing a condensed polycyclic aromatic group, provided that at least one of R¹ or R² in a molecule is an alkenyl group or hydrogen atom and at least one R² in a molecule is a condensed polycyclic aromatic group or a group containing a condensed polycyclic aromatic group; and **a, b, c,** and **d** are numbers that satisfy: 0.01 ≤ **a** ≤ 0.8, 0 ≤ **b** ≤ 0.5, 0.2 ≤ **c** ≤ 0.9, 0 ≤ **d** < 0.2, and **a** + **b** + **c** + **d** = 1.

In addition, the production method of the present invention is characterized by subjecting a silane compound (I) represented by the following general formula:

R³SiX₃

wherein, R³ is a condensed polycyclic aromatic group or a group containing a condensed polycyclic aromatic group; and X are alkoxy groups, acyloxy groups, halogen atoms, or hydroxyl groups;
a disiloxane (II) represented by the following general formula:

R⁴₃SiOSiR⁴₃

wherein R⁴ are alkyl groups, alkenyl groups, or phenyl groups;
and/or a silane compound (III) represented by the following general formula:

R⁴₃SiX

wherein R⁴ and X are synonymous with the groups described above; and, if necessary, a silane compound (IV) represented by the following general formula:

R⁴₍₄₋ₙ)SiXₙ

wherein, R⁴ and X are synonymous with the groups described above; and n is an integer of from 2 to 4, however, one of components (II) to (IV) used in this reaction has an alkenyl group, to a hydrolysis/condensation reaction in the presence of an acid or an alkali.

In addition, another production method of the present invention is characterized by subjecting a silane compound (I) represented by the following general formula:

R³SiX₃

wherein, R³ is a condensed polycyclic aromatic group or a group containing a condensed polycyclic aromatic group; and X are alkoxy groups, acyloxy groups, halogen atoms, or hydroxyl groups;
a disiloxane (V) represented by the following general formula:

R⁶₃SiOSiR⁶₃

wherein R⁶ are alkyl groups, phenyl groups, or hydrogen atoms;
and/or a silane compound (VI) represented by the following general formula:

R⁶₃SiX

wherein R⁶ and X are synonymous with the groups described above;
and, if necessary, a silane compound (VII) represented by the following general formula:

R⁶₍₄₋ₙ₎SiXₙ

wherein, R⁶ and X are synonymous with the groups described above; and n is an integer of from 2 to 4, however, one of components (V) to (VII) used in this reaction has a silicon-bonded hydrogen atom, to a hydrolysis/condensation reaction in the presence of an acid.

### Effects of the Invention

The organopolysiloxane of the present invention is characterized by forming a cured product having a high refractive index, high transparency, and excellent heat resistance when subjected to a hydrosilylation reaction, and especially, by forming a cured product having a low water vapor permeability. In addition, the production method of the present invention is characterized by being able to efficiently produce this type of organopolysiloxane, and especially, by being able to produce an organopolysiloxane having a narrow molecular weight distribution.

### Detailed Description of the Invention

First, the organopolysiloxane of the present invention will be described in detail.

The organopolysiloxane of the present invention is represented by the following average unit formula:

(R¹₃SiO_{1/2})ₐ (R¹₂SiO_{2/2})_{b} (R²SiO_{3/2})_{c} (SiO_{4/2})_{d}

In the formula, R¹ are alkyl groups, alkenyl groups, phenyl groups, or hydrogen atoms. Examples of the alkyl group for R¹ include methyl groups, ethyl groups, propyl groups, and butyl groups. Of these, methyl groups are preferable. Examples of the alkenyl group for R¹ include vinyl groups, allyl groups, and butenyl groups. Of these, vinyl groups are preferable.

In the formula, R² is an alkyl group, an alkenyl group, a phenyl group, a hydrogen atom, or is a condensed polycyclic aromatic group or a group containing a condensed polycyclic aromatic group. Examples of the alkyl group for R² include the groups represented by R¹. Examples of the alkenyl group for R² include the groups represented by R¹. Examples of the condensed polycyclic aromatic group for R² include naphthyl groups, anthracenyl groups, phenanthryl groups, pyrenyl groups, and such condensed polycyclic aromatic groups where a hydrogen atom is replaced by an alkyl group such as a methyl group, an ethyl group, and the like; by an alkoxy group such as a methoxy group, an ethoxy group, and the like; or by a halogen atom such as a chlorine atom, a bromine atom, and the like. The condensed polycyclic aromatic groups for R² are preferably naphthyl groups. Examples of the group containing a condensed polycyclic aromatic group for R² include alkyl groups containing a condensed polycyclic aromatic group such as naphthyl ethyl groups, naphthyl propyl groups, anthracenyl ethyl groups, phenanthryl ethyl groups, pyrenyl ethyl groups, and the like; and such condensed polycyclic aromatic groups where a hydrogen atom is replaced by an alkyl group such as a methyl group, an ethyl group, and the like; by an alkoxy group such as a methoxy group, an ethoxy group, and the like; or by a halogen atom such as a chlorine atom, a bromine atom, and the like. The groups containing a condensed polycyclic aromatic group for R² are preferably alkyl groups containing a condensed polycyclic aromatic group, and particularly preferably naphthyl ethyl groups. In particular, an organopolysiloxane in which R² is an alkyl group containing a condensed polycyclic aromatic group has the characteristic of having a relatively low viscosity.

Further, in the formula, at least one of R¹ or R² in a molecule is an alkenyl group or a hydrogen atom. Moreover, in the formula, at least one R² in a molecule is a condensed polycyclic aromatic group or a group containing a condensed polycyclic aromatic group. Preferably, at least 50 mol% of R² in a molecule are condensed polycyclic aromatic groups or groups containing a condensed polycyclic aromatic group.

Further, in the formula, **a, b, c,** and **d** are numbers that satisfy: 0.01 ≤ **a** ≤ 0.8, 0 ≤ **b** ≤ 0.5, 0.2 ≤ **c** ≤ 0.9, 0 ≤ **d** < 0.2, and **a** + **b** + **c** + **d** = 1. Preferably, **a, b, c,** and **d** are numbers that satisfy: 0.05 ≤ **a** ≤ 0.7, 0 ≤ **b** ≤ 0.4, 0.3 ≤ **c** ≤ 0.9, 0 ≤ **d** < 0.2, and **a + b + c + d** = 1. Particularly preferably, **a, b, c,** and **d** are numbers that satisfy: 0.1 ≤ **a** ≤ 0.6, 0 ≤ **b** ≤ 0.3, 0.4 ≤ **c** ≤ 0.9, 0 ≤ **d** < 0.2, and **a** + **b** + **c** + **d** = 1. **When a is** below the lower limit of the range described above, the obtained organopolysiloxane changes from the liquid state to solid state, and handling and processability declines. On the other hand, transparency of the obtained organopolysiloxane declines if **a** exceeds the upper limit of the range described above. In addition, if **b** exceeds the upper limit of the range described above, a cured product formed by curing the obtained organopolysiloxane becomes sticky. In addition, if **c** is lower than the lower limit of the range described above, the refractive index significantly decreases, but if **c** exceeds the upper limit of the range described above, a cured product formed by curing the obtained organopolysiloxane is excessively hard and brittle. Furthermore, if **d** exceeds the upper limit of the range described above, a cured product formed by curing the obtained organopolysiloxane is extremely hard and brittle and the solubility of the obtained organopolysiloxane in organic solvents significantly decreases.

The molecular weight of this type of organopolysiloxane is not particularly limited, but the weight average molecular weight is preferably within the range from 400 to 5,000 in order to achieve excellent handling/workability, and the like.

Although the organopolysiloxane of the present invention is represented by the above average unit formula, a small amount of the hydroxyl groups or alkoxy groups such as methoxy groups, ethoxy groups, or the like may be bonded to silicon atoms in the molecule. An organopolysiloxane that contains silicon-bonded hydroxyl groups or silicon-bonded alkoxy groups can improve the adhesive properties of a curable silicone composition that contains this organopolysiloxane, can improve adhesion of a cured product thereof to a substrate, and can improve affinity with other components contained in a curable silicone composition.

This type of organopolysiloxane has at least one alkenyl group or silicon-bonded hydrogen atom in a molecule, and can therefore form a cured product having a high refractive index, high transparency, and excellent heat resistance when subjected to a hydrosilylation reaction. That is, it is possible to prepare a hydrosilylation-curable silicone composition by using the organopolysiloxane of the present invention as a primary component.

For example, in cases where the organopolysiloxane of the present invention contains alkenyl groups, it is possible to prepare a curable silicone composition by mixing an organopolysiloxane having at least two silicon-bonded hydrogen atoms in a molecule with a hydrosilylation catalyst.

This organopolysiloxane containing silicon-bonded hydrogen atoms is not particularly limited. Examples of bonding sites for silicon-bonded hydrogen atoms include molecular terminals and/or silicon atoms in molecular chains. The other groups bonded to silicon atom are exemplified by alkyl groups such as methyl groups, ethyl groups, propyl groups, butyl groups, pentyl groups, hexyl groups, heptyl groups, and the like; aryl groups such as phenyl groups, tolyl groups, xylyl groups, naphthyl groups, and the like; aralkyl groups such as benzyl groups, phenethyl groups, and the like; and halogenated alkyl groups such as chloromethyl groups, 3-chloropropyl groups, 3,3,3-trifluoropropyl groups, and the like; and such other groups are preferably methyl groups or phenyl groups. Such organopolysiloxanes may have a straight, branched, cyclic, net-like, or a partially branched straight chain molecular structure, of which the straight chain molecular structure is preferable.

This type of organopolysiloxane is exemplified by a methylhydrogenpolysiloxane capped at both molecular terminals with trimethylsiloxy groups, a copolymer of dimethylsiloxane and methylhydrogensiloxane capped at both molecular terminals with trimethylsiloxy groups, a copolymer of dimethylsiloxane, methylhydrogensiloxane, and methylphenylsiloxane capped at both molecular terminals with trimethylsiloxy groups, a dimethylpolysiloxane capped at both molecular terminals with dimethylhydrogensiloxy groups, a copolymer of dimethylsiloxane and methylphenylsiloxane capped at both molecular terminals with dimethylhydrogensiloxy groups, a methylphenylpolysiloxane capped at both molecular terminals with dimethylhydrogensiloxy groups, an organopolysiloxane copolymer composed of siloxane units represented by the general formula R¹₃SiO_{1/2} and siloxane units represented by the general formula R'₂HSiO_{1/2} and siloxane units represented by the formula SiO_{4/2}, an organopolysiloxane copolymer composed of siloxane units represented by the general formula R'₂HSiO_{1/2} and siloxane units represented by the formula SiO_{4/2}, an organopolysiloxane copolymer composed of siloxane units represented by the general formula R'HSiO_{2/2}, and siloxane units represented by the general formula R'SiO_{3/2} or siloxane units represented by the formula HSiO_{3/2}, and a mixture of two or more such organopolysiloxanes. Furthermore, R' in the formulae are alkyl groups such as methyl groups, ethyl groups, propyl groups, butyl groups, pentyl groups, hexyl groups, heptyl groups, and the like; aryl groups such as phenyl groups, tolyl groups, xylyl groups, naphthyl groups, and the like; aralkyl groups such as benzyl groups, phenethyl groups, and the like; or halogenated alkyl groups such as chloromethyl groups, 3-chloropropyl groups, 3,3,3-trifluoropropyl groups, and the like.

In addition, examples of hydrosilylation catalysts include platinum-based catalysts, rhodium-based catalysts, and palladium-based catalysts, with platinum-based catalysts being preferred due to being able to significantly accelerate curing of the above-mentioned composition. Examples of the platinum-based catalyst include a platinum fine powder, chloroplatinic acid, an alcohol solution of chloroplatinic acid, a platinum-alkenylsiloxane complex, a platinum-olefin complex and a platinum-carbonyl complex, with a platinum-alkenylsiloxane complex being preferred.

Meanwhile, in cases where the organopolysiloxane of the present invention contains silicon-bonded hydrogen atoms, it is possible to prepare a curable silicone composition by mixing an organopolysiloxane having at least two alkenyl groups in a molecule with a hydrosilylation catalyst.

This organopolysiloxane containing alkenyl groups is not particularly limited. Examples of alkenyl groups include vinyl groups, allyl groups, butenyl groups, pentenyl groups, hexenyl groups, and heptenyl groups, with vinyl groups being preferred. The other groups bonded to silicon atom are exemplified by alkyl groups such as methyl groups, ethyl groups, propyl groups, butyl groups, pentyl groups, hexyl groups, heptyl groups, and the like; aryl groups such as phenyl groups, tolyl groups, xylyl groups, naphthyl groups, and the like; aralkyl groups such as benzyl groups, phenethyl groups, and the like; and halogenated alkyl groups such as chloromethyl groups, 3-chloropropyl groups, 3,3,3-trifluoropropyl groups, and the like; and such other groups are preferably methyl groups or phenyl groups. Such organopolysiloxanes may have a straight, branched, cyclic, net-like, or a partially branched straight chain molecular structure, of which the straight chain molecular structure is preferable.

This type of organopolysiloxane is exemplified by a copolymer of dimethylsiloxane and methylvinylsiloxane capped at both molecular terminals with trimethylsiloxy groups, a methylvinylpolysiloxane capped at both molecular terminals with trimethylsiloxy groups, a copolymer of dimethylsiloxane, methylvinylsiloxane, and methylphenylsiloxane capped at both molecular terminals with trimethylsiloxy groups, a dimethylpolysiloxane capped at both molecular terminals with dimethylvinylsiloxy groups, a methylvinylpolysiloxane capped at both molecular terminals with dimethylvinylsiloxy groups, a copolymer of dimethylsiloxane and methylvinylsiloxane capped at both molecular terminals with dimethylvinylsiloxy groups, a copolymer of dimethylsiloxane, methylvinylsiloxane, and methylphenylsiloxane capped at both molecular terminals with dimethylvinylsiloxy groups, an organopolysiloxane copolymer composed of siloxane units represented by the general formula R'₃SiO_{1/2} and siloxane units represented by the general formula R'₂R"SiO_{1/2} and siloxane units represented by the formula SiO_{4/2}, an organopolysiloxane copolymer composed of siloxane units represented by the general formula R'₂R"SiO_{1/2} and siloxane units represented by the formula SiO_{4/2}, an organopolysiloxane copolymer composed of siloxane units represented by the general formula R'R"SiO_{2/2} and siloxane units represented by the general formula R'SiO_{3/2} or siloxane units represented by the general formula R"SiO_{3/2}, and a mixture of two or more such organopolysiloxanes. Furthermore, R' in the formulae are synonymous with the groups described above. Furthermore, R" in the formulae are alkenyl groups and are exemplified by vinyl groups, allyl groups, butenyl groups, pentenyl groups, hexenyl groups, and heptenyl groups.

Examples of the hydrosilylation-reaction catalyst include those described above.

In addition, it is possible to prepare a curable silicone composition by mixing an organopolysiloxane of the present invention that contains alkenyl groups, an organopolysiloxane of the present invention that contains silicon-bonded hydrogen atoms, and a hydrosilylation catalyst. Moreover, the components are as mentioned above.

In the composition, the content of the organopolysiloxane having silicon-bonded hydrogen atoms is not particularly limited, but the amount preferably results in a molar ratio of silicon-bonded hydrogen atoms relative to alkenyl groups in the composition being within the range of from 0.1 to 5 and particularly preferably within the range of from 0.5 to 2.

In addition, the content of the hydrosilylation catalyst in the above-mentioned composition is not particularly limited as long as this is a quantity that accelerates curing of the above-mentioned composition, but is preferably a content whereby the quantity of metal atoms in the catalyst is from 0.01 to 500 ppm, more preferably from 0.01 to 100 ppm, and most preferably from 0.01 to 50 ppm, in terms of weight units relative to the above-mentioned composition.

The composition may also contain an adhesion-imparting agent for improving the adhesion of the composition. Preferred adhesion-imparting agents are organosilicon compounds having at least one alkoxy group bonded to a silicon atom in a molecule. This alkoxy group is exemplified by a methoxy group, an ethoxy group, a propoxy group, a butoxy group, and a methoxyethoxy group; and methoxy group is particularly preferred. Moreover, non-alkoxy groups bonded to a silicon atom of this organosilicon compound are exemplified by substituted or non-substituted monovalent hydrocarbon groups such as alkyl groups, alkenyl groups, aryl groups, aralkyl groups, halogenated alkyl groups and the like; epoxy group-containing monovalent organic groups such as glycidoxyalkyl groups (such as a 3-glycidoxypropyl group, a 4-glycidoxybutyl group, and the like), epoxycyclohexylalkyl groups (such as a 2-(3,4-epoxycyclohexyl)ethyl group, a 3-(3,4-epoxycyclohexyl)propyl group, and the like), oxiranylalkyl groups (such as a 4-oxiranylbutyl group, an 8-oxiranyloctyl group, and the like), and the like; acrylic group-containing monovalent organic groups such as a 3-methacryloxypropyl group and the like; and a hydrogen atom. This organosilicon compound preferably has a silicon-bonded alkenyl group or silicon-bonded hydrogen atom. Moreover, due to the ability to impart good adhesion with respect to various types of substrates, this organosilicon compound preferably has at least one epoxy group-containing monovalent organic group in a molecule. This type of organosilicon compound is exemplified by organosilane compounds, organosiloxane oligomers and alkyl silicates. Molecular structure of the organosiloxane oligomer or alkyl silicate is exemplified by a linear structure, partially branched linear structure, branched chain structure, ring-shaped structure, and net-shaped structure. A linear chain structure, branched chain structure, and net-shaped structure are particularly preferred. This type of organosilicon compound is exemplified by silane compounds such as 3-glycidoxypropyltrimethoxysilane, 2-(3,4-epoxycyclohexyl)ethyltrimethoxysilane, 3-methacryloxy propyltrimethoxysilane, and the like; siloxane compounds having at least one of silicon-bonded alkenyl groups and silicon-bonded hydrogen atoms, and at least one silicon-bonded alkoxy group in a molecule; mixtures of a silane compound or siloxane compound having at least one silicon-bonded alkoxy group and a siloxane compound having at least one silicon-bonded hydroxyl group and at least one silicon-bonded alkenyl group in a molecule; and methyl polysilicate, ethyl polysilicate, and epoxy group-containing ethyl polysilicate. In the composition, the content of this adhesion-imparting agent is not particularly limited, but is preferably within the range of from 0.01 to 10 parts by weight per total of 100 parts by weight of the composition.

The production method of the present invention will now be described in detail.

The production method of the present invention is characterized by subjecting a silane compound (I) represented by the following general formula:

R³SiX₃,

a disiloxane (II) represented by the following general formula:

R⁴₃SiOSiR⁴₃,

and/or a silane compound (III) represented by the following general formula:

R⁴₃SiX,

to a hydrolysis/condensation reaction in the presence of an acid or an alkali.

The above-mentioned silane compound (I) represented by the following general formula:

R³SiX₃

is a raw material used to introduce condensed polycyclic aromatic groups or groups containing a condensed polycyclic aromatic group into the obtained organopolysiloxane. In the formula, R³ is a condensed polycyclic aromatic group or a group containing a condensed polycyclic aromatic group. Examples of the condensed polycyclic aromatic group for R³ include naphthyl groups, anthracenyl groups, phenanthryl groups, and pyrenyl groups, preferred examples include naphthyl groups, condensed polycyclic aromatic groups where a hydrogen atom is replaced by an alkyl group such as a methyl group, an ethyl group, and the like; by an alkoxy group such as a methoxy group, an ethoxy group, and the like; or by a halogen atom such as a chlorine atom, a bromine atom, and the like, and naphthyl groups are preferred. In addition, examples of the group containing a condensed polycyclic aromatic group for R³ include alkyl groups containing a condensed polycyclic aromatic group such as naphthyl ethyl groups, naphthyl propyl groups, anthracenyl ethyl groups, phenanthryl ethyl groups, pyrenyl ethyl groups, and the like; and groups where a hydrogen atom in the condensed polycyclic aromatic group is replaced by an alkyl group such as a methyl group, an ethyl group, and the like; by an alkoxy group such as a methoxy group, an ethoxy group, and the like; or by a halogen atom such as a chlorine atom, a bromine atom, and the like. The groups containing a condensed polycyclic aromatic group for R³ are preferably alkyl groups containing a condensed polycyclic aromatic group, and particularly preferably naphthyl ethyl groups. In addition, X in the formula are alkoxy groups, acyloxy groups, halogen atoms or hydroxyl groups. Examples of the alkoxy group for X include methoxy groups, ethoxy groups, and propoxy groups. Examples of the acyloxy groups for X include acetoxy groups. Examples of the halogen atoms for X include chlorine atoms, and bromine atoms.

This type of silane compound (I) is exemplified by alkoxysilanes such as naphthyl trimethoxysilane, anthracenyl trimethoxysilane, phenanthryl trimethoxysilane, pyrenyl trimethoxysilane, naphthyl triethoxysilane, anthracenyl triethoxysilane, phenanthryl triethoxysilane, pyrenyl triethoxysilane, naphthyl ethyl trimethoxysilane, naphthyl propyl trimethoxysilane, anthracenyl ethyl trimethoxysilane, and the like; acyloxysilanes such as naphthyl triacetoxysilane, anthracenyl triacetoxysilane, phenanthryl triacetoxysilane, pyrenyl triacetoxysilane, and the like; halosilanes such as naphthyl trichlorosilane, anthracenyl trichlorosilane, phenanthryl trichlorosilane, pyrenyl trichlorosilane, and the like; and hydroxysilanes such as naphthyl trihydroxysilane, anthracenyl trihydroxysilane, phenanthryl trihydroxysilane, pyrenyl trihydroxysilane, and the like.

In addition, the above-mentioned disiloxane compound (II) represented by the following general formula:

R⁴₃SiOSiR⁴₃

is a raw material used to introduce M unit siloxanes into the obtained organopolysiloxane. In the formula, R⁴ are alkyl groups, alkenyl groups, or phenyl groups. Examples of the alkyl group for R⁴ include methyl groups, ethyl groups, and propyl groups. Of these, methyl groups are preferable. Examples of the alkenyl group for R⁴ include vinyl groups, allyl groups, and butenyl groups. Of these, vinyl groups are preferable.

This type of disiloxane (II) is exemplified by 1,3-divinyl-tetramethyldisiloxane, 1,3-divinyl-1,3-diphenyl-dimethyldisiloxane, 1-vinyl-pentamethyldisiloxane, 1-vinyl-1,3-diphenyl-trimethyldisiloxane, and 1,3-diphenyl-tetramethyldisiloxane, hexamethyldisiloxane; and this disiloxane (II) is preferably a disiloxane having an alkenyl group.

In addition, the above-mentioned silane compound (III) represented by the following general formula:

R⁴₃SiX

is also a raw material used to introduce M unit siloxanes into the obtained organopolysiloxane. In the formula, R⁴ are synonymous with the groups described above. In the formula, X is synonymous with the group described above.

This type of silane compound (III) is exemplified by alkoxysilanes such as dimethylvinylmethoxysilane, methylphenylvinylmethoxysilane, diphenylvinylmethoxysilane, dimethylvinylethoxysilane, methylphenylvinylethoxysilane, diphenylvinylethoxysilane, trimethylmethoxysilane, dimethylphenylmethoxysilane, and the like; acyloxysilanes such as dimethylvinylacetoxysilane, methylphenylvinylacetoxysilane, diphenylvinylacetoxysilane, trimethylacetoxysilane, dimethylphenylacetoxysilane, and the like; halosilanes such as dimethylvinyl chlorosilane, methylphenylvinyl chlorosilane, diphenylvinyl chlorosilane, trimethyl chlorosilane, methylphenyl chlorosilane, and the like; and silanols such as dimethylvinylsilanol, methylphenylvinylsilanol, diphenylvinylsilanol, and the like; and this silane compound (III) is preferably a silane compound having an alkenyl group.

In the production method of the present invention, it is possible to react a silane compound (IV) represented by the following general formula:

R⁴₍₄₋ₙ)SiXₙ

if necessary. In the formula, R⁴ is synonymous with the groups described above. In the formula, X is synonymous with the groups described above. In the formula, n is an integer of from 2 to 4.

This type of silane compound (IV) is exemplified by alkoxysilanes such as trimethylmethoxysilane, trimethylethoxysilane, methyldiphenylmethoxysilane, methyldiphenylethoxysilane, dimethyldimethoxysilane, methylphenyldimethoxysilane, diphenyldimethoxysilane, methyltrimethoxysilane, phenyltrimethoxysilane, tetramethoxysilane, tetraethoxysilane, and the like; acetoxysilanes such as trimethylacetoxysilane, methyldiphenylacetoxysilane, methyldiphenylacetoxysilane, dimethyldiacetoxysilane, methylphenyldiacetoxysilane, diphenyldiacetoxysilane, methyltriacetoxysilane, phenyltriacetoxysilane, tetraacetoxysilane, and the like; halosilanes such as trimethylchlorosilane, methyldiphenylchlorosilane, methyldiphenylchlorosilane, dimethyldichlorosilane, methylphenyldichlorosilane, diphenyldichlorosilane, methyltrichlorosilane, phenyltrichlorosilane, tetrachlorosilane, and the like; and hydroxysilanes such as trimethylsilanol, methyldiphenylsilanol, methyldiphenylsilanol, dimethyldihydroxysilane, methylphenyldihydroxysilane, diphenyldihydroxysilane, methyltrihydroxysilane, phenyltrihydroxysilane, and the like.

Further, in the production method of the present invention, at least one of component (II) to component (IV) used in the reaction must have an alkenyl group.

The production method of the present invention is characterized by subjecting the silane compound (I), the disiloxane (II) and/or the silane compound (III), and as may be required, the silane compound (IV) to hydrolysis and condensation reaction in the presence of an acid or an alkali. The charged ratio of each of the components is the ratio such that the obtained organopolysiloxane has the average unit formula below:

(R⁴₃SiO_{1/2})ₐ (R⁴₂SiO_{2/2})_{b} (R⁵SiO_{3/2})_{c} (SiO_{4/2})_{d}

That is to say, in the formula, R⁴ are synonymous with the groups described above. R⁵ is a group represented by R³ or is a group represented by R⁴. However, at least one of R⁴ or R⁵ in a molecule is an alkenyl group. At least one R⁵ in a molecule is a condensed polycyclic aromatic group or a group containing a condensed polycyclic aromatic group. Further, in the formula, a, b, c, and d are numbers that satisfy: 0.01≤ **a** ≤ 0.8, 0 ≤ **b** ≤ 0.5, 0.2 ≤ **c** ≤ 0.9, 0 ≤ **d** < 0.2, and **a** + **b** + **c** + **d** = 1. Preferably, **a, b, c,** and **d** are numbers that satisfy: 0.05 ≤ **a** ≤ 0.7, 0 ≤ **b** ≤ 0.4, 0.3 ≤ **c** ≤ 0.9, 0 ≤ d < 0.2, and **a** + **b** + **c** + **d** = 1. Particularly preferably, **a, b, c,** and **d** are numbers that satisfy: 0.1 ≤ **a** ≤ 0.6, 0 ≤ **b** ≤ 0.3, 0.4 ≤ **c** ≤ 0.9, 0 ≤ **d** < 0.2, and **a** + **b** + **c** + **d** = 1.

Acids that may be used are exemplified by hydrochloric acid, acetic acid, formic acid, nitric acid, oxalic acid, sulfuric acid, phosphoric acid, polyphosphoric acid, polycarboxylic acid, trifluoromethane sulfonic acid, and ion exchange resins. Further, the utilized base is exemplified by inorganic bases such as potassium hydroxide, sodium hydroxide, and the like; and organic base compounds such as triethylamine, diethylamine, monoethanolamine, diethanolamine, triethanolamine, ammonia water, tetramethyl ammonium hydroxide, alkoxysilanes having an amino group, aminopropyltrimethoxysilane, and the like.

Furthermore, an organic solvent may be used in the reaction. The utilized organic solvent is exemplified by ethers, ketones, acetates, aromatic or aliphatic hydrocarbons, γ-butyrolactone, or the like; and mixtures of two or more types of such solvents. Preferred organic solvents are exemplified by propylene glycol monomethyl ether, propylene glycol monomethyl ether acetate, propylene glycol monoethyl ether, propylene glycol monopropyl ether, propylene glycol monobutyl ether, propylene glycol mono-t-butyl ether, γ-butyrolactone, toluene, and xylene.

In order to accelerate the hydrolysis and condensation reaction of each of the components in the reaction, water or a mixed solution of water and alcohol is preferably added. Methanol and ethanol are preferred examples of the alcohol. If an organic solvent is used and this reaction is promoted by heating, the reaction is preferably performed at the reflux temperature of the organic solvent.

In addition, another production method of the present invention will now be described in detail.

Another production method of the present invention is characterized by subjecting a silane compound (I) represented by the following general formula:

R³SiX₃,

and a disiloxane compound (V) represented by the following general formula:

R⁶₃SiOSiR⁶₃,

and/or a silane compound (VI) represented by general formula:

R⁶₃SiX,

to a hydrolysis/condensation reaction in the presence of an acid.

The above-mentioned silane compound (I) represented by the following general formula:

R³SiX₃

is a raw material used to introduce condensed polycyclic aromatic groups or groups containing a condensed polycyclic aromatic group into the obtained organopolysiloxane. In the formula, R³ is a condensed polycyclic aromatic group or a group containing a condensed polycyclic aromatic group; and examples thereof are the same as the groups described above. Moreover, X are alkoxy groups, acyloxy groups, halogen atoms, or hydroxyl groups; and examples thereof are the same as the groups described above. Examples of such silane compound (I) are the same as the compounds described above.

In addition, the above-mentioned disiloxane compound (V) represented by the following general formula:

R⁶₃SiOSiR⁶₃

is a raw material used to introduce M unit siloxanes into the obtained organopolysiloxane. In the formula, R⁶ are alkyl groups, phenyl groups or hydrogen atoms. Examples of the alkyl group for R⁶ include methyl groups, ethyl groups, and propyl groups.

This type of disiloxane (V) is exemplified by 1,1,3,3-tetramethyldisiloxane, 1,3-diphenyl-1,3-dimethyldisiloxane, 1,1,3,3,3-pentamethyldisiloxane, 1,3-diphenyl-1,3,3-trimethyldisiloxane, 1,3-diphenyl-tetramethyldisiloxane, and hexamethyldisiloxane; and this disiloxane (V) is preferably a disiloxane having a silicon-bonded hydrogen atom.

In addition, the above-mentioned silane compound (VI) represented by the following general formula:

R⁶₃SiX

is also a raw material used to introduce M unit siloxanes into the obtained organopolysiloxane. In the formula, R⁶ are synonymous with the groups described above. In the formula, X is synonymous with the groups described above.

This type of silane compound (VI) is exemplified by alkoxysilanes such as dimethylmethoxysilane, methylphenylmethoxysilane, diphenylmethoxysilane, dimethylethoxysilane, methylphenylethoxysilane, diphenylethoxysilane, trimethylmethoxysilane, dimethylphenylmethoxysilane, and the like; acyloxysilanes such as dimethylacetoxysilane, methylphenylacetoxysilane, diphenylacetoxysilane, trimethylacetoxysilane, dimethylphenylacetoxysilane, and the like; halosilanes such as dimethylchlorosilane, methylphenylchlorosilane, diphenylchlorosilane, trimethylchlorosilane, methylphenylchlorosilane, and the like; and silanols such as dimethylsilanol, methylphenylsilanol, diphenylsilanol, and the like. The silane compound (VI) is preferably a silane compound having a silicon-bonded hydrogen atom.

In the production method of the present invention, it is possible to react a silane compound (VII) represented by the following general formula:

R⁶₍₄₋ₙ)SiXₙ

if necessary. In the formula, R⁶ is synonymous with the groups described above. In the formula, X is synonymous with the groups described above. In the formula, n is an integer of from 2 to 4.

This type of silane compound (VII) is exemplified by alkoxysilanes such as trimethylmethoxysilane, trimethylethoxysilane, methyldiphenylmethoxysilane, methyldiphenylethoxysilane, dimethyldimethoxysilane, methylphenyldimethoxysilane, diphenyldimethoxysilane, methyltrimethoxysilane, phenyltrimethoxysilane, tetramethoxysilane, tetraethoxysilane, and the like; acetoxysilanes such as trimethylacetoxysilane, methyldiphenylacetoxysilane, methyldiphenylacetoxysilane, dimethyldiacetoxysilane, methylphenyldiacetoxysilane, diphenyldiacetoxysilane, methyltriacetoxysilane, phenyltriacetoxysilane, tetraacetoxysilane, and the like; halosilanes such as trimethylchlorosilane, methyldiphenylchlorosilane, methyldiphenylchlorosilane, dimethyldichlorosilane, methylphenyldichlorosilane, diphenyldichlorosilane, methyltrichlorosilane, phenyltrichlorosilane, tetrachlorosilane, and the like; and hydroxysilanes such as trimethylsilanol, methyldiphenylsilanol, methyldiphenylsilanol, dimethyldihydroxysilane, methylphenyldihydroxysilane, diphenyldihydroxysilane, methyltrihydroxysilane, phenyltrihydroxysilane, and the like.

Furthermore, at least one component among component (V) to component (VII) used in the reaction of the production method of the present invention must have a silicon-bonded hydrogen atom.

The production method of the present invention is characterized by subjecting the silane compound (I), the disiloxane (V) and/or the silane compound (VI), and as may be required, the silane compound (VII) to a hydrolysis and condensation reaction in the presence of an acid. The charged ratio of each of the components is the ratio such that the obtained organopolysiloxane has the average unit formula below:

(R⁶₃SiO_{1/2})ₐ (R⁶₂SiO_{2/2})_{b} (R⁷SiO_{3/2})_{c} (SiO_{4/2})_{d}

That is to say, in the formula, R⁶ are groups synonymous with the groups described above. R⁷ is a group represented by R³ or is a group represented by R⁶. However, at least one of R⁶ or R⁷ in a molecule is a hydrogen atom. At least one R⁷ in a molecule is a condensed polycyclic aromatic group or a group containing a condensed polycyclic aromatic group. Further, in the formula, a, b, c, and **d** are numbers that satisfy: 0.01 ≤ **a** ≤ 0.8, 0 ≤ **b** ≤ 0.5, 0.2 ≤ **c** ≤ 0.9, 0 ≤ d < 0.2, and **a** + **b** + **c** + **d** = 1. Preferably, **a, b, c,** and **d** are numbers that satisfy: 0.05 ≤ **a** ≤ 0.7, 0 ≤ **b** ≤ 0.4, 0.3 ≤ **c** ≤ 0.9, 0 ≤ **d** < 0.2, and **a** + **b** + **c** + **d** = 1. Particularly preferably, **a, b, c,** and **d** are numbers that satisfy: 0.1 ≤ **a** ≤ 0.6, 0 ≤ **b** ≤ 0.3, 0.4 ≤ **c** ≤ 0.9, 0 ≤ **d<** 0.2, and **a** + **b** + **c** + **d** = 1.

Acids that may be used are exemplified by strong acids such as hydrochloric acid, nitric acid, sulfuric acid, phosphoric acid, polyphosphoric acid, trifluoromethane sulfonic acid, and the like; carboxylic acids such as acetic acid, formic acid, oxalic acid, polycarboxylic acid, and the like, and carboxylic acid anhydrides such as acetic acid anhydride and the like.

Furthermore, an organic solvent may be used in the reaction. Examples of the utilized organic solvent are the same as the solvents described above.

In order to accelerate the hydrolysis and condensation reaction of each of the components in the reaction, water or a mixed solution of water and alcohol is preferably added. Methanol and ethanol are preferred examples of the alcohol. If an organic solvent is used and this reaction is promoted by heating, the reaction is preferably performed at the reflux temperature of the organic solvent.

### EXAMPLES

The organopolysiloxane and production method thereof of the present invention will now be described in greater detail by means of Practical Examples. Note that the viscosity in the Practical Examples is the value at 25°C. In addition, in the average unit formulae, Me denotes a methyl group, Vi denotes a vinyl group, Ph denotes a phenyl group, Naph denotes a 1-naphthyl group, Naph-Et denotes a naphthyl ethyl group, and Ep denotes a 3-glycidoxypropyl group.

In addition, the characteristics of the organopolysiloxane were evaluated as follows.

### [Weight average molecular weight and dispersity]

The weight average molecular weight (Mw) and number average molecular weight (Mn) in terms of standard polystyrene of the organopolysiloxane were determined by means of gel permeation chromatography using a UV detector. The dispersity (Mw/Mn) was determined from these values.

### [Refractive index]

The refractive index of the organopolysiloxane was measured at 25°C and a wavelength of 632.8 nm.

### [Practical Example 1]

10 g (40.3 mmol) of 1-naphthyltrimethoxysilane, 2.5 g (13.3 mmol) of 1,3-divinyl-tetramethyldisiloxane, and 20 g of toluene were placed in a reaction vessel and mixed, after which 2.2 g (122.1 mmol) of water and 10 g of methanol were added to the reaction vessel, 0.066 g (0.44 mmol) of trifluoromethane sulfonic acid was added to the reaction vessel under stirring, and heating to reflux was carried out for 2 hours. Thereafter, the mixture was distilled at atmospheric pressure by heating until a temperature of 85°C was reached. The mixture was reacted for 1 hour at this temperature. Thereafter, 0.06 g (1.07 mmol) of potassium hydroxide was added, and atmospheric pressure distillation was performed while heating to a reaction temperature of 120°C. The mixture was reacted for 1 hour at this temperature. The mixture was cooled to room temperature, and a neutralization reaction was performed by adding 0.07 g (1.2 mmol) of acetic acid. After the salt that was produced was filtered out, the low boiling point substances were removed from the resulting clear solution under reduced pressure while heating, and 9.7 g (yield: 87.0%) of a colorless, clear, viscous liquid with a viscosity exceeding 10,000 Pa·s was obtained.

As a result of NMR analysis, this viscous liquid was found to be the organopolysiloxane represented by the following average unit formula:

(ViMe₂SiO_{1/2})_{0.39} (NaphSiO_{3/2})_{0.61}

The weight average molecular weight (Mw) of this organopolysiloxane was 1,000. The dispersity (Mw/Mn) was 1.11. The refractive index was 1.602.

### [Practical Example 2]

5 g (20.1 mmol) of 1-naphthyltrimethoxysilane, 0.63g (3.3 mmol) of 1,3-divinyl-tetramethyldisiloxane, and 10 g of toluene were placed in a reaction vessel and mixed, after which 1.1 g (61.1 mmol) of water and 5 g of methanol were added to the reaction vessel, 0.034 g (0.23 mmol) of trifluoromethane sulfonic acid was added to the reaction vessel under stirring, and heating to reflux was carried out for 2 hours. Thereafter, the mixture was distilled at atmospheric pressure by heating until a temperature of 85°C was reached. The mixture was reacted for 1 hour at this temperature. Thereafter, 0.03 g (0.54 mmol) of potassium hydroxide was added, and atmospheric pressure distillation was performed while heating to a reaction temperature of 120°C. The mixture was reacted for 1 hour at this temperature. The mixture was cooled to room temperature, and a neutralization reaction was performed by adding 0.04 g (0.61 mmol) of acetic acid. After the salt that was produced was filtered out, the low boiling point substances were removed from the resulting clear solution under reduced pressure while heating, and 3.4 g (yield: 81.0%) of a colorless, clear, solid was obtained.

As a result of NMR analysis, this solid was found to be an organopolysiloxane represented by the following average unit formula:

(ViMe₂SiO_{1/2})_{0.25} (NaphSiO_{3/2})_{0.75}

The weight average molecular weight (Mw) of this organopolysiloxane was 1,100. The dispersity (Mw/Mn) was 1.09. The refractive index was 1.631.

### [Practical Example 3]

5 g (20.1 mmol) of 1-naphthyltrimethoxysilane, 1.47 g (8.1 mmol) of methylphenyldimethoxysilane, 0.38 g (2.0 mmol) of 1,3-divinyl-tetramethyldisiloxane, and 10 g of toluene were placed in a reaction vessel and mixed, after which 1.4 g (77.7 mmol) of water and 5 g of methanol were added to the reaction vessel, 0.034 g (0.23 mmol) of trifluoromethane sulfonic acid was added to the reaction vessel under stirring, and heating to reflux was carried out for 2 hours. Thereafter, the mixture was distilled at atmospheric pressure by heating until a temperature of 85°C was reached. The mixture was reacted for 1 hour at this temperature. Thereafter, 0.03 g (0.54 mmol) of potassium hydroxide was added, and atmospheric pressure distillation was performed while heating to a reaction temperature of 120°C. The mixture was reacted for 1 hour at this temperature. The mixture was cooled to room temperature, and a neutralization reaction was performed by adding 0.04 g (0.61 mmol) of acetic acid. After the salt that was produced was filtered out, the low boiling point substances were removed from the resulting clear solution under reduced pressure while heating, and 4.3 g (yield: 84.3%) of a colorless, clear, solid was obtained.

As a result of NMR analysis, this solid was found to be the organopolysiloxane represented by the following average unit formula:

(ViMe₂SiO_{1/2})_{0.13} (MePhSiO_{2/2})_{0.25} (NaphSiO_{3/2})_{0.62}

The weight average molecular weight (Mw) of this organopolysiloxane was 1,100. The dispersity (Mw/Mn) was 1.15. The refractive index was 1.619.

### [Practical Example 4]

10 g (40.3 mmol) of 1-naphthyltrimethoxysilane, 1.6 g (8.8 mmol) of methylphenyldimethoxysilane, 1.6 g (5.2 mmol) of 1,3-divinyl-1,3-diphenyl-dimethyldisiloxane, and 20 g of toluene were placed in a reaction vessel and mixed, after which 2.5 g (138.8 mmol) of water and 10 g of methanol were added to the reaction vessel, 0.069 g (0.46 mmol) of trifluoromethane sulfonic acid was added to the reaction vessel under stirring, and heating to reflux was carried out for 2 hours. Thereafter, the mixture was distilled at atmospheric pressure by heating until a temperature of 85°C was reached. The mixture was reacted for 1 hour at this temperature. Thereafter, 0.06 g (1.1 mmol) of potassium hydroxide was added, and atmospheric pressure distillation was performed while heating to a reaction temperature of 120°C. The mixture was reacted for 1 hour at this temperature. The mixture was cooled to room temperature, and a neutralization reaction was performed by adding 0.07 g (1.2 mmol) of acetic acid. After the salt that was produced was filtered out, the low boiling point substances were removed from the resulting clear solution under reduced pressure while heating, and 8.3 g (yield: 74.8%) of a colorless, clear, solid was obtained.

As a result of NMR analysis, this solid was found to be the organopolysiloxane represented by the following average unit formula:

(MeViPhSiO_{1/2})_{0.15} (MePhSiO_{2/2})_{0.25} (NaphSiO_{3/2})_{0.60}

The weight average molecular weight (Mw) of this organopolysiloxane was 1,000. The dispersity (Mw/Mn) was 1.09. The refractive index was 1.637.

### [Practical Example 5]

10 g (40.3 mmol) of 1-naphthyltrimethoxysilane, 1.2 g (5.6 mmol) of methyldiphenylsilanol, 3.3 g (10.6 mmol) of 1 ,3-divinyl-1 ,3-diphenyl-dimethyldisiloxane, and 20 g of toluene were placed in a reaction vessel and mixed, after which 2.2 g (122.1 mmol) of water and 10 g of methanol were added to the reaction vessel, 0.069 g (0.46 mmol) of trifluoromethane sulfonic acid was added to the reaction vessel under stirring, and heating to reflux was carried out for 2 hours. Thereafter, the mixture was distilled at atmospheric pressure by heating until a temperature of 85°C was reached. The mixture was reacted for 1 hour at this temperature. Thereafter, 0.06 g (1.1 mmol) of potassium hydroxide was added, and atmospheric pressure distillation was performed while heating to a reaction temperature of 120°C. The mixture was reacted for 1 hour at this temperature. The mixture was cooled to room temperature, and a neutralization reaction was performed by adding 0.07 g (1.2 mmol) of acetic acid. After the salt that was produced was filtered out, the low boiling point substances were removed from the resulting clear solution under reduced pressure while heating, and 10.0 g (yield: 85.5%) of a colorless, clear, gum-like viscous liquid was obtained.

As a result of NMR analysis, this liquid was found to be the organopolysiloxane represented by the following average unit formula:

(MePh₂SiO_{1/2})_{0.08} (MePhViSiO_{1/2})_{0.32} (NaphSiO_{3/2})_{0.60}

The weight average molecular weight (Mw) of this organopolysiloxane was 1,000. The dispersity (Mw/Mn) was 1.11. The refractive index was 1.623.

### [Practical Example 6]

10 g (40.3 mmol) of 1-naphthyltrimethoxysilane, 3.6 g (16.8 mmol) of methyldiphenylsilanol, 2.2 g (11.7 mmol) of 1,3-divinyl-tetramethyldisiloxane, and 20 g of toluene were placed in a reaction vessel and mixed, after which 2.2 g (122.1 mmol) of water and 10 g of methanol were added to the reaction vessel, 0.069 g (0.46 mmol) of trifluoromethane sulfonic acid was added to the reaction vessel under stirring, and heating to reflux was carried out for 2 hours. Thereafter, the mixture was distilled at atmospheric pressure by heating until a temperature of 85°C was reached. The mixture was reacted for 1 hour at this temperature. Thereafter, 0.06 g (1.1 mmol) of potassium hydroxide was added, and atmospheric pressure distillation was performed while heating to a reaction temperature of 120°C. The mixture was reacted for 1 hour at this temperature. The mixture was cooled to room temperature, and a neutralization reaction was performed by adding 0.07 g (1.2 mmol) of acetic acid. After the salt that was produced was filtered out, the low boiling point substances were removed from the resulting clear solution under reduced pressure while heating, and 12.0 g (yield: 93.0%) of a colorless, clear liquid was obtained.

As a result of NMR analysis, this liquid was found to be the organopolysiloxane represented by the following average unit formula:

(MePh₂SiO_{1/2})_{0.21} (Me₂ViSiO_{1/2})_{0.29} (NaphSiO_{3/2})_{0.50}

The weight average molecular weight (Mw) of this organopolysiloxane was 1,100. The dispersity (Mw/Mn) was 1.17. The refractive index was 1.604.

### [Practical Example 7]

10 g (40.3 mmol) of 1-naphthyltrimethoxysilane, 4.0 g (18.7 mmol) of methyldiphenylhydroxysilane, 3.3 g (10.6 mmol) of 1,3-divinyl-1,3-diphenyl-dimethyldisiloxane, and 20 g of toluene were placed in a reaction vessel and mixed, after which 2.2 g (122.1 mmol) of water and 10 g of methanol were added to the reaction vessel, 0.069 g (0.46 mmol) of trifluoromethane sulfonic acid was added to the reaction vessel under stirring, and heating to reflux was carried out for 2 hours. Thereafter, the mixture was distilled at atmospheric pressure by heating until a temperature of 85°C was reached. The mixture was reacted for 1 hour at this temperature. Thereafter, 0.06 g (1.1 mmol) of potassium hydroxide was added, and atmospheric pressure distillation was performed while heating to a reaction temperature of 120°C. The mixture was reacted for 1 hour at this temperature. The mixture was cooled to room temperature, and a neutralization reaction was performed by adding 0.07 g (1.2 mmol) of acetic acid. After the salt that was produced was filtered out, the low boiling point substances were removed from the resulting clear solution under reduced pressure while heating, and 14.3 g (yield: 99.0%) of a colorless, clear liquid was obtained.

As a result of NMR analysis, this liquid was found to be the organopolysiloxane represented by the following average unit formula:

(MePh₂SiO_{1/2})_{0.23} (MeViPhSiO_{1/2})_{0.27} (NaphSiO_{1/2})_{0.50}

The weight average molecular weight (Mw) of this organopolysiloxane was 1,100. The dispersity (Mw/Mn) was 1.17. The refractive index was 1.616.

### [Practical Example 8]

50 g (201.3 mmol) of 1-naphthyltrimethoxysilane, 20.9 g (67.3 mmol) of 1,3-divinyl-1,3-diphenyl-dimethyldisiloxane, and 100 g of toluene were placed in a reaction vessel and mixed, after which 12.0 g (666.1 mmol) of water and 50 g of methanol were added to the reaction vessel, 0.345 g (2.3 mmol) of trifluoromethane sulfonic acid was added to the reaction vessel under stirring, and heating to reflux was carried out for 2 hours. Thereafter, the mixture was distilled at atmospheric pressure by heating until a temperature of 85°C was reached. The mixture was reacted for 1 hour at this temperature. Thereafter, 0.30 g (5.4 mmol) of potassium hydroxide was added, and atmospheric pressure distillation was performed while heating to a reaction temperature of 120°C. The mixture was reacted for 1 hour at this temperature. The mixture was cooled to room temperature, and a neutralization reaction was performed by adding 0.40 g (6.7 mmol) of acetic acid. After the salt that was produced was filtered out, the low boiling point substances were removed from the resulting clear solution under reduced pressure while heating, and 56.7 g (yield: 99.3%) of a colorless, clear, viscous liquid was obtained.

As a result of NMR analysis, this viscous liquid was found to be the organopolysiloxane represented by the following average unit formula:

(MeViPhSiO_{1/2})_{0.40} (NaphSiO_{3/2})_{0.60}

The weight average molecular weight (Mw) of this organopolysiloxane was 1,100. The dispersity (Mw/Mn) was 1.12. The refractive index was 1.622.

### [Practical Example 9]

50 g (201.3 mmol) of 1-naphthyltrimethoxysilane, 6.0 g (28.0 mmol) of methyldiphenylsilanol, 16.5 g (53.1 mmol) of 1,3-divinyl-1,3-diphenyl-dimethyldisiloxane, and 100 g of toluene were placed in a reaction vessel and mixed, after which 11.0 g (610.6 mmol) of water and 50 g of methanol were added to the reaction vessel, 0.345 g (2.30 mmol) of trifluoromethane sulfonic acid was added to the reaction vessel under stirring, and heating to reflux was carried out for 2 hours. Thereafter, the mixture was distilled at atmospheric pressure by heating until a temperature of 85°C was reached. The mixture was reacted for 1 hour at this temperature. Thereafter, 0.30 g (5.40 mmol) of potassium hydroxide was added, and atmospheric pressure distillation was performed while heating to a reaction temperature of 120°C. The mixture was reacted for 1 hour at this temperature. The mixture was cooled to room temperature, and a neutralization reaction was performed by adding 0.40 g (6.7 mmol) of acetic acid. After the salt that was produced was filtered out, the low boiling point substances were removed from the resulting clear solution under reduced pressure while heating, and 57.6 g (yield: 98.5%) of a colorless, clear, viscous liquid was obtained.

As a result of NMR analysis, this viscous liquid was found to be the organopolysiloxane represented by the following average unit formula:

(MePh₂SiO_{1/2})_{0.08} (MeViPhSiO_{1/2})_{0.32} (NaphSiO_{3/2})_{0.60}

The weight average molecular weight (Mw) of this organopolysiloxane was 1,100. The dispersity (Mw/Mn) was 1.12. The refractive index was 1.625.

### [Practical Example 10]

10 g (40.3 mmol) of 1-naphthyltrimethoxysilane, 5.8 g (27.1 mmol) of methyldiphenylsilanol, 4.2 g (13.5 mmol) of 1 ,3-divinyl-1 ,3-diphenyl-dimethyldisiloxane, and 20 g of toluene were placed in a reaction vessel and mixed, after which 2.2 g (122.1 mmol) of water and 10 g of methanol were added to the reaction vessel, 0.069 g (0.46 mmol) of trifluoromethane sulfonic acid was added to the reaction vessel under stirring, and heating to reflux was carried out for 2 hours. Thereafter, the mixture was distilled at atmospheric pressure by heating until a temperature of 85°C was reached. The mixture was reacted for 1 hour at this temperature. Thereafter, 0.06 g (1.1 mmol) of potassium hydroxide was added, and atmospheric pressure distillation was performed while heating to a reaction temperature of 120°C. The mixture was reacted for 1 hour at this temperature. The mixture was cooled to room temperature, and a neutralization reaction was performed by adding 0.07 g (1.2 mmol) of acetic acid. After the salt that was produced was filtered out, the low boiling point substances were removed from the resulting clear solution under reduced pressure while heating, and 16.3 g (yield: 96.5%) of a colorless, clear liquid was obtained.

As a result of NMR analysis, this liquid was found to be the organopolysiloxane represented by the following average unit formula:

(MePh₂SiO_{1/2})_{0.29} (MeViPhSiO_{1/2})_{0.29} (NaphSiO_{3/2})_{0.42}

The weight average molecular weight (Mw) of this organopolysiloxane was 1,000. The dispersity (Mw/Mn) was 1.05. The refractive index was 1.610.

### [Practical Example 11]

10 g (40.3 mmol) of 1-naphthyltrimethoxysilane, 2.7 g (26.4 mmol) of vinyldimethylsilanol, 5.8 g (27.1 mmol) of diphenylmethylsilanol, 20 g of toluene, and 0.04 g (0.71 mmol) of potassium hydroxide were placed in a reaction vessel and heating to reflux was carried out for 1 hour. Next, the mixture was cooled to room temperature, and a mixture of 1.2 g (66.6 mmol) of water and 10 g of methanol was added. The mixture was distilled under normal pressure while heating until the reaction temperature reached 120°C, and the mixture was reacted for 2 hours at this temperature. The mixture was then cooled to room temperature, and a neutralization reaction was performed by adding 0.08 g (1.3 mmol) of acetic acid. After the salt that was produced was filtered out, the low boiling point substances were removed from the resulting clear solution under reduced pressure while heating, and 14.3 g (yield: 94%) of a colorless, clear, viscous liquid was obtained.

As a result of NMR analysis, this liquid was found to be the organopolysiloxane represented by the following average unit formula:

(ViMe₂SiO_{1/2})_{0.28} (Ph₂MeSiO_{1/2})_{0.28} (NaphSiO_{3/2})_{0.44}

This organopolysiloxane had a weight average molecular weight (Mw) of 1,000, a dispersity (Mw/Mn) of 1.05, and a refractive index of 1.603.

### [Practical Example 12]

50 g (201 mmol) of 1-naphthyltrimethoxysilane was placed in a reaction vessel and melted by being heated, after which 0.06 g (0.4 mmol) of trifluoromethane sulfonic acid was added to the reaction vessel. While the system was heated to 45 to 50°C, 9.3 g (154.9 mmol) of acetic acid was added in a drop-wise manner. After completion of drop-wise addition, the mixture was heated and stirred for 30 minutes at 50°C. The low boiling point substances were distilled at atmospheric pressure by heating until the reaction temperature reached 80°C. Thereafter, the mixture was cooled down to room temperature. 24.4 g (181.6 mmol) of 1,1,3,3-tetramethyldisiloxane was added in a drop-wise manner, and the mixture was heated to reach a reaction temperature of 45°C. Thereafter, 18 g of acetic acid was added drop-wise at 45 to 50°C. After completion of drop-wise addition, the mixture was heated and stirred for 30 minutes at 50°C. While the system was maintained at a temperature of 60°C or less by air or water cooling, 15.5 g (151.8 mmol) of acetic acid anhydride was added in a drop-wise manner. After completion of drop-wise addition, the mixture was heated and stirred for 30 minutes at 50°C. Thereafter, toluene and water were added, the mixture was stirred, and the mixture was allowed to sit. The water washing was performed while repeatedly removing the lower layer. After confirming that pH of the lower layer was 7, the upper layer (i.e. toluene layer) was heated and distilled under reduced pressure to remove low boiling point substances. 43 g (yield: 76.0%) of colorless transparent liquid was obtained.

As a result of NMR analysis, this liquid was found to be the organopolysiloxane represented by the following average unit formula:

(HMe₂SiO_{1/2})_{0.59} (NaphSiO_{3/2})_{0.41}

The weight average molecular weight (Mw) of this organopolysiloxane was 660. The dispersity (Mw/Mn) was 1.05. The refractive index was 1.548.

### [Practical Example 13]

24.84 g (90 mmol) of 2-(trimethoxysilylethyl)naphthalene, 5.58 g (30 mmol) of 1,3-divinyl-tetramethyl disiloxane and 10.4 g of toluene were placed in a reaction vessel and mixed, after which 0.072 g (0.48 mmol) of trifluoromethane sulfonic acid was added to the reaction vessel, 5.35 g (297 mmol) of water was added to the reaction vessel under stirring, and heating to reflux was carried out for 2 hours. Next, the mixture was distilled at atmospheric pressure by heating until the temperature reached 85°C. Thereafter, 0.068 g (1.21 mmol) of potassium hydroxide was added, and atmospheric pressure distillation was performed while heating to a reaction temperature of 120°C. The mixture was reacted for 6 hours at this temperature. The mixture was then cooled to room temperature, and a neutralization reaction was performed by adding 0.072 g (1.21 mmol) of acetic acid. After the generated salt was filtered out, low boiling point substances were removed from the resulting clear solution under reduced pressure while heating, and 20.12 g (yield: 83%) of a clear liquid having a viscosity of 137 Pa·s was obtained.

As a result of NMR analysis, this liquid was found to be the organopolysiloxane represented by the following average unit formula:

(Me₂ViSiO_{1/2})_{0.40} (Naph-EtSiO_{3/2})_{0.60}

The weight average molecular weight (Mw) of this organopolysiloxane was 2,000. The dispersity (Mw/Mn) was 1.09. The refractive index was 1.594.

### [Applied Example 1]

4.01 g of the organopolysiloxane prepared in Practical Example 5, which is represented by the following average unit formula:

(MePh₂SiO_{1/2})_{0.08}(MePhViSiO_{1/2})_{0.32}(NaphSiO_{3/2})_{0.60},

1.77 g of an organopolysiloxane represented by the following average formula:

HMe₂SiO(Ph₂SiO)_{2.5}SiMe₂H,

0.33 g of the organopolysiloxane prepared in Practical Example 12, which is represented by the following average unit formula:

(HMe₂SiO_{1/2})_{0.59}(NaphSiO_{3/2})_{0.41},

0.038 g of a cyclic methylvinylsiloxane, and a 1,3-divinyl-tetramethyldisiloxane solution of a platinum-1 ,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 790 MPa. In addition, this cured product had a refractive index of 1.609 at a wavelength of 632.8 nm. This cured product was aged in an oven at 150°C for 100 hours, but no change in color was observed.

### [Applied Example 2]

12 g of the organopolysiloxane prepared in Practical Example 8, which is represented by the following average unit formula:

(MeViPhSiO_{1/2})_{0.40} (NaphSiO_{3/2})_{0.60},

5.34 g of an organopolysiloxane represented by the following average formula:

HMe₂SiO(Ph₂SiO)_{2.5}SiMe₂H,

1.8 g of the organopolysiloxane prepared in Practical Example 12, which is represented by the following average unit formula:

(HMe₂SiO_{1/2})_{0.59} (NaphSiO_{3/2})_{0.41},

0.06 g of a cyclic methylvinyl siloxane, and a 1,3-divinyl-tetramethyldisiloxane solution of a platinum-1,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 950 MPa. In addition, this cured product had a refractive index of 1.606 at a wavelength of 632.8 nm. This cured product was aged in an oven at 150°C for 100 hours, but no change in color was observed. In addition, the water vapor permeability of this cured product was measured in accordance with the method stipulated in JIS Z 0208 at a thickness of 1 mm, a temperature of 40°C and a relative humidity of 90%, and found to be 2.4 g/m²·24 hr.

### [Applied Example 3]

12 g of the organopolysiloxane prepared in Practical Example 5, which is represented by the following average unit formula:

(MePh₂SiO_{1/2})_{0.08} (MePhViSiO_{1/2})_{0.32} (NaphSiO_{3/2})_{0.60},

2.85 g of an organopolysiloxane represented by the following average formula:

HMe₂SiO(Ph₂SiO)SiMe₂H,

0.9 g of the organopolysiloxane prepared in Practical Example 12, which is represented by the following average unit formula:

(HMe₂SiO_{1/2})_{0.59} (NaphSiO_{3/2})_{0.41},

0.06 g of a cyclic methylvinyl siloxane, and a 1,3-divinyl-tetramethyldisiloxane solution of a platinum-1,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 970 MPa. In addition, this cured product had a refractive index of 1.608 at a wavelength of 632.8 nm. This cured product was aged in an oven at 150°C for 100 hours, but no change in color was observed.

### [Applied Example 4]

12 g of the organopolysiloxane prepared in Practical Example 8, which is represented by the following average unit formula:

(MeViPhSiO_{1/2})_{0.40} (NaphSiO_{3/2})_{0.60},

8.4 g of an organopolysiloxane represented by the following average formula:

HMe₂SiO(Ph₂SiO)_{2.5}SiMe₂H,

0.075 g of a cyclic methylvinyl siloxane and a 1,3-divinyl-tetramethyldisiloxane solution of a platinum-1,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 660 MPa. In addition, this cured product had a refractive index of 1.606 at a wavelength of 632.8 nm. This cured product was aged in an oven at 150°C for 100 hours, but no change in color was observed.

### [Applied Example 5]

5 g of the organopolysiloxane prepared in Practical Example 8, which is represented by the following average unit formula:

(MeViPhSiO_{1/2})_{0.40} (NaphSiO_{3/2})_{0.60},

2 g of the organopolysiloxane prepared in Practical Example 12, which is represented by the following average unit formula:

(HMe₂SiO_{1/2})_{0.59} (NaphSiO_{3/2})_{0.41},

0.03 g of a cyclic methylvinyl siloxane, and a 1,3-divinyl-tetramethyldisiloxane solution of a platinum-1,3-divinyl-tetramethyldisiloxane complex (used in the composition in such an amount that in terms of weight units the content of the platinum was 2 ppm) were homogeneously mixed so as to produce a durable silicone composition.

This curable silicone composition was coated on a quartz glass plate and cured by being heated for 1 hour at 150°C. The obtained cured product was clear and colorless and had a storage modulus at 25°C of 1,000 MPa. In addition, this cured product had a refractive index of 1.607 at a wavelength of 632.8 nm. This cured product was aged in an oven at 150°C for 100 hours, but no change in color was observed.

### [Applied Example 6]

5 g of the organopolysiloxane prepared in Practical Example 8, which is represented by the following average unit formula:

(MeViPhSiO_{1/2})_{0.40} (NaphSiO_{3/2})_{0.60},

1 g of an organopolysiloxane represented by the following average formula:

ViMe₂SiO(MePhSiO)₂₅SiMe₂Vi,

0.5 g of an organopolysiloxane represented by the following average formula:

HMe₂SiO(Ph₂SiO)_{2.5}SiMe₂H,

1.5 g of the organopolysiloxane prepared in Practical Example 12, which is represented by the following average unit formula:

(HMe₂SiO_{1/2})_{0.59} (NaphSiO_{3/2})_{0.41},

0.04 g of the organopolysiloxane represented by the following average unit formula:

(EpSiO_{1/2})_{0.3}(ViMeSiO_{1/2})_{0.3}(Me2SiO_{1/2})_{0.3}(MeO_{1/2})_{0.2}

0.03 g of a cyclic methylvinyl siloxane, and a 1 ,3-divinyl-tetramethyldisiloxane solution of a platinum-1,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 650 MPa. In addition, this cured product had a refractive index of 1.602 at a wavelength of 632.8 nm. This cured product was aged in an oven at 150°C for 100 hours, but no change in color was observed.

### [Applied Example 7]

5 g of the organopolysiloxane prepared in Practical Example 8, which is represented by the following average unit formula:

(MeViPhSiO_{1/2})_{0.40} (NaphSiO_{3/2})_{0.60},

1 g of an organopolysiloxane represented by the following average formula:

ViMe₂SiO(MePhSiO)₂₅SiMe₂Vi,

2 g of the organopolysiloxane prepared in Practical Example 12, which is represented by the following average unit formula:

(HMe₂SiO_{1/2})_{0.59} (NaphSiO_{3/2})_{0.41},

0.03 g of a cyclic methylvinyl siloxane, and a 1 ,3-divinyl-tetramethyldisiloxane solution of a platinum-1,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 890 MPa. In addition, this cured product had a refractive index of 1.604 at a wavelength of 632.8 nm. This cured product was aged in an oven at 150°C for 100 hours, but no change in color was observed.

### [Applied Example 8]

5 g of the organopolysiloxane prepared in Practical Example 8, which is represented by the following average unit formula:

(MeViPhSiO_{1/2})_{0.40} (NaphSiO_{3/2})_{0.60},

0.5 g of an organopolysiloxane represented by the following average formula:

ViMe₂SiO(MePhSiO)₂₅SiMe₂Vi,

3 g of an organopolysiloxane represented by the following average formula:

HMe₂SiO(Ph₂SiO)_{2.5}SiMe₂H,

0.03 g of a cyclic methylvinyl siloxane, and a 1,3-divinyl-tetramethyldisiloxane solution of a platinum-1 ,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 260 MPa. In addition, this cured product had a refractive index of 1.600 at a wavelength of 632.8 nm. This cured product was aged in an oven at 150°C for 100 hours, but no change in color was observed.

### [Applied Example 9]

9 g of an organopolysiloxane represented by the following average formula:

ViMe₂SiO(MePhSiO)₂₅SiMe₂Vi,

1.02 g of the organopolysiloxane prepared in Practical Example 12, which is represented by the following average unit formula:

(HMe₂SiO_{1/2})_{0.59} (NaphSiO_{3/2})_{0.41},

0.06 g of a cyclic methylvinyl siloxane, and a 1,3-divinyl-tetramethyldisiloxane solution of a platinum-1,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 0.24 MPa. In addition, this cured product had a refractive index of 1.547 at a wavelength of 632.8 nm. This cured product was aged in an oven at 150°C for 100 hours, but no change in color was observed.

### [Applied Example 10]

5.76 g of an organopolysiloxane represented by the following average unit formula:

(Me₂ViSiO_{1/2})_{0.25} (PhSiO_{3/2})_{0.75},

2 g of an organopolysiloxane represented by the following average formula:

HMe₂SiO(Ph₂SiO)SiMe₂H,

0.24 g of an organopolysiloxane represented by the following average unit formula:

(HMe₂SiO_{1/2})_{0.60} (PhSiO_{3/2})_{0.40},

0.5 g of the organopolysiloxane prepared in Practical Example 12, which is represented by the following average unit formula:

(HMe₂SiO_{1/2})_{0.59} (NaphSiO_{3/2})_{0.41},

0.06 g of a cyclic methylvinyl siloxane, and a 1,3-divinyl-tetramethyldisiloxane solution of a platinum-1,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 84 MPa. In addition, this cured product had a refractive index of 1.547 at a wavelength of 632.8 nm. This cured product was aged in an oven at 150°C for 100 hours, but no change in color was observed.

### [Applied Example 11]

2.06 g of the organopolysiloxane prepared in Practical Example 8, which is represented by the following average unit formula:

(MeViPhSiO_{1/2})_{0.40} (NaphSiO_{3/2})_{0.60},

7.13 g of an organopolysiloxane represented by the following average unit formula:

(Me₂ViSiO_{1/2})_{0.25} (PhSiO_{3/2})_{0.75},

0.3 g of an organopolysiloxane represented by the following average formula:

HMe₂SiO(Ph₂SiO)SiMe₂H,

2.48 g of the organopolysiloxane represented by the following average unit formula:

(HMe₂SiO_{1/2})_{0.60} (PhSi0_{3/2})₀.₄₀,

0.06 g of a cyclic methylvinyl siloxane, and a 1 ,3-divinyl-tetramethyldisiloxane solution of a platinum-1 ,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 540 MPa. In addition, this cured product had a refractive index of 1.560 at a wavelength of 632.8 nm. This cured product was aged in an oven at 150°C for 100 hours, but no change in color was observed.

### [Applied Example 12]

4.9 g of an organopolysiloxane represented by the following average unit formula:

(Me2ViSiO_{1/2})_{0.25} (PhSiO_{3/2})_{0.75}),

0.65 g of an organopolysiloxane represented by the following average unit formula:

(Me₂ViSiO_{1/2})_{0.10} (Me₃SiO_{1/2})_{0.15} (PhSiO_{3/2})_{0.75},

1.5 g of an organopolysiloxane represented by the following average formula:

HMe₂SiO(Ph₂SiO)SiMe₂H,

0.16 g of an organopolysiloxane represented by the following average unit formula:

(HMe₂SiO_{1/2})_{0.60} (PhSiO_{3/2})₀.₄₀,

0.02 g of a cyclic methylvinylsiloxane, and a 1,3-divinyl-tetramethyldisiloxane solution of a platinum-1 ,3-divinyl-tetramethyldisiloxane complex (used in the composition in such an amount that in terms of weight units the content of the platinum was 2 ppm) were homogeneously mixed so as to produce a curable silicone composition.

This curable silicone composition was coated on a quartz glass plate and cured by being heated for 1 hour at 150°C. The obtained cured product was clear and colorless and had a storage modulus at 25°C of 45 MPa. In addition, this cured product had a refractive index of 1.548 at a wavelength of 632.8 nm. This cured product was aged in an oven at 150°C for 100 hours, but no change in color was observed. In addition, the water vapor permeability of this cured product was measured in accordance with the method stipulated in JIS Z 0208 at a thickness of 1 mm, a temperature of 40°C, and a relative humidity of 90%, and found to be 15 g/m²·24 hr.

### [Applied Example 13]

56.0 g of the organopolysiloxane prepared in Practical Example 13, which is represented by the following average unit formula:

(Me₂ViSiO_{1/2})_{0.40}(Naph-EtSiO_{3/2})_{0.60},

44.0 g of an organopolysiloxane represented by the following average formula:

HMe₂SiO(Ph₂SiO)_{2.5}SiMe₂H,

and a 1,3-divinyl-tetramethyldisiloxane solution of a platinum-1,3-divinyl-tetramethyldisiloxane complex (used in the composition in such an amount that in terms of weight units the content of the platinum was 2 ppm) were homogeneously mixed so as to produce a curable silicone composition having a viscosity of 3 Pa·s.

This curable silicone composition was coated on a quartz glass plate and cured by being heated for 1 hour at 150°C. The obtained cured product was clear and colorless and had a refractive index of 1.582 at a wavelength of 632.8 nm. This cured product was aged in an oven at 150°C for 100 hours, but no change in color was observed.

### Industrial Applicability

The organopolysiloxane of the present invention can form a cured product having a high refractive index, high transparency, and excellent heat resistance, and especially a cured product having a low water vapor permeability, when subjected to a hydrosilylation reaction, and is therefore suitable for use as a sealing agent or coating agent for LED elements or as a material for forming lenses.

## Claims

1. An organopolysiloxane represented by the following average unit formula:
(R¹₃SiO_{1/2})ₐ (R¹₂SiO_{2/2})_{b} (R²SiO_{3/2})_{c} (SiO_{4/2})_{d}
wherein, R¹ are alkyl groups, alkenyl groups, phenyl groups, or hydrogen atoms; R² is a group represented by R¹, a condensed polycyclic aromatic group, or a group containing a condensed polycyclic aromatic group, provided that at least one of R¹ or R² in a molecule is an alkenyl group or hydrogen atom and at least one R² in a molecule is a condensed polycyclic aromatic group or a group containing a condensed polycyclic aromatic group; and a, b, c, and d are numbers that satisfy: 0.01 ≤ **a** ≤ 0.8, 0 ≤ **b** ≤ 0.5, 0.2 **c** ≤ 0.9, 0 ≤ **d** < 0.2, and **a** + **b** + **c** + **d** = 1.

2. The organopolysiloxane according to claim 1, wherein at least 50 mol% of R² in a molecule are condensed polycyclic aromatic groups or groups containing a condensed polycyclic aromatic group.

3. The organopolysiloxane according to claim 1 or 2, wherein the condensed polycyclic aromatic groups are naphthyl groups.

4. A method for producing an organopolysiloxane represented by the following average unit formula:
(R⁴₃SiO_{1/2})ₐ (R⁴₂SiO_{2/2})_{b} (R⁵SiO_{3/2})_{c} (SiO_{4/2})_{d}
wherein, R⁴ are alkyl groups, alkenyl groups or phenyl groups; R⁵ is a condensed polycyclic aromatic group, a group containing a condensed polycyclic aromatic group, or a group represented by R⁴, provided that at least one of R⁴ or R⁵ in a molecule is an alkenyl group, at least one R⁵ in a molecule is a condensed polycyclic aromatic group or a group containing a condensed polycyclic aromatic group; and **a, b, c,** and **d** are numbers that satisfy: 0.01 ≤ **a** ≤ 0.8, 0 ≤ **b** ≤ 0.5, 0.2 ≤ **c** ≤ 0.9, 0 ≤ **d** < 0.2, and **a** + **b** + **c** + **d** = 1, comprising: subjecting a silane compound (I) represented by the following general formula:
R³SiX₃
wherein, R³ is a condensed polycyclic aromatic group or a group containing a condensed polycyclic aromatic group; and X are alkoxy groups, acyloxy groups, halogen atoms, or hydroxyl groups;
a disiloxane (II) represented by the following general formula:
R⁴₃SiOSiR⁴₃
wherein R⁴ are group ssynonymous with the groups described above;
and/or a silane compound (III) represented by the following general formula:
R⁴₃SiX
wherein R⁴ and X are synonymous with the groups described above;
and, if necessary, a silane compound (IV) represented by the following general formula:
R⁴₍₄₋ₙ)SiXₙ
wherein, R⁴ and X are synonymous with the groups described above; and n is an integer of from 2 to 4, however, one of components (II) to (IV) used in this reaction has an alkenyl group, to a hydrolysis/condensation reaction in the presence of an acid or an alkali.

5. A method for producing an organopolysiloxane, represented by the following average unit formula:
(R⁶₃SiO_{1/2})ₐ (R⁶₂SiO_{2/2})_{b} (R⁷SiO_{3/2})_{c} (SiO_{4/2})_{d}
wherein, R⁶ are alkyl groups, phenyl groups, or hydrogen atoms; R⁷ is a condensed polycyclic aromatic group, a group containing a condensed polycyclic aromatic group, or a group represented by R⁶, provided that at least one of R⁶ or R⁷ in a molecule is a hydrogen atom, at least one R⁷ in a molecule is a condensed polycyclic aromatic group or a group containing a condensed polycyclic aromatic group; and **a, b, c,** and **d** are numbers that satisfy: 0.01 ≤ **a** ≤ 0.8, 0 ≤ **b** ≤ 0.5, 0.2 ≤ **c** ≤ 0.9, 0 ≤ **d** < 0.2, and **a** + **b** + **c** + **d** = 1, comprising: subjecting a silane compound (I) represented by the following general formula:
R³SiX₃
wherein, R³ is a condensed polycyclic aromatic group or a group containing a condensed polycyclic aromatic group; and X are alkoxy groups, acyloxy groups, halogen atoms, or hydroxyl groups;
a disiloxane (V) represented by the following general formula:
R⁶₃SiOSiR⁶₃
wherein R⁶ are groups synonymous with the groups described above;
and/or a silane compound (VI) represented by the following general formula:
R⁶₃SiX
wherein R⁶ and X are synonymous with the groups described above;
and, if necessary, a silane compound (VII) represented by the following general formula:
R⁶₍₄₋ₙ)SiXₙ
wherein, R⁶ and X are synonymous with the groups described above; and n is an integer of from 2 to 4, however, one of components (V) to (VII) used in this reaction has a silicon-bonded hydrogen atom, to a hydrolysis/condensation reaction in the presence of an acid.

6. The production method according to claim 5, wherein the acid is a carboxylic acid, a carboxylic acid anhydride, or a strong acid.
